# EUROPÄISCHE PATENTANMELDUNG

(11) **EP 1 688 857 A2**
(43) Veröffentlichungstag der Anmeldung: **09.08.2006**
(21) Anmeldenummer: 06000685.5
(22) Anmeldetag: 13.01.2006
(51) Int. Cl.: G06F 21/00

(54) **Verfahren zur Anmeldung eines Nutzers an einem Computersystem**

(30) Priorität: 02.02.2005 DE 102005004902
(71) Anmelder: Utimaco Safeware AG, 61440 Oberursel (DE)
(72) Erfinder: Schuetz, Harald, A-4040 Linz (AT)
(74) Vertreter: Priesmeyer, Thomas

(57) **Zusammenfassung**

Offenbart ist ein Verfahren zur Anmeldung eines Nutzers an einem Computersystem, wobei sich der Nutzer durch ein Zertifikat und einen dem Zertifikat zugeordneten Identifikationscode an dem Computersystem identifiziert und in dem Computersystem durch Anmeldedaten authentisiert wird.

Um die Notwendigkeit eines Authentisierungsservers zu vermeiden und das zudem das Roaming von Benutzern zu ermöglichen wird vorgeschlagen, dass die Anmeldedaten in dem Computersystem aus dem Zertifikat ermittelt werden.

## Beschreibung

Die Erfindung betrifft ein Verfahren zur Anmeldung eines Nutzers an einem Computersystem, wobei sich der Nutzer durch ein Zertifikat an dem Computersystem identifiziert und er in dem Computersystem durch Anmeldedaten authentisiert wird.

An allgemein bekannten Computersystemen beispielsweise mit dem Betriebssystem Microsoft Windows NT kann nur nach Anmeldung gearbeitet werden, da das Filesystem Zugriffsberechtigungen bezogen auf einzelne Benutzer setzt oder verweigert. Bei der Anmeldung wird durch den logon Prozess eine Authentisierungssoftware, im Falle von NT das systemeigene Modul GINA (Graphical Identification and Authentication) gestartet. Dieses ist mit der bekannten Willkommensseite und der "schnellen Benutzerumschaltung" für die Identifikation und Authentifizierung von Benutzern eines Rechners zuständig, kann aber von Drittherstellern ersetzt oder umgeschrieben werden um die Anmeldeprozedur zu verändern. Erst nach erfolgreicher Anmeldung - also nach Eingabe des Nutzernamens und des dazu gehörenden Passworts - wird ein "access token" kreiert, eine Erfolgsmeldung an den logon Prozess zurückgegeben und die für den Nutzer konfigurierte Arbeitsoberfläche aufgerufen.

Allgemein bekannte Verfahren der eingangs genannten Art zur Anmeldung eines Nutzers an einem NT-Computersystem mittels eines Zertifikats basieren auf Kerberos (www.faqs.org/rfcs/rfc1510.html), einem zur Authentisierung in offenen und unsicheren Computernetzen (beispielsweise dem Internet) entwickelten Netzwerkprotokoll. Bei der Anmeldung des Nutzers mit den bekannten Verfahren sind zumindest zwei Computersysteme beteiligt: Das Computersystem, an dem der Nutzer sich anmeldet, der Kerberos-Server und gegebenenfalls weitere Server, die der Nutzer über das Computersystem nutzen will. Der Kerberos-Server authentisiert zunächst sich selbst gegenüber Computersystem und Servern und verifiziert deren Identität und sodann sowohl das Computersystem gegenüber den Servern als auch die Server gegenüber dem Computersystem um Man-In-The-Middle-Angriffe zu unterbinden. Die bekannten auf Kerberos basierenden Verfahren unterstützen so ein "Single Sign On" (SSO) des Nutzers: Nach einmaliger Anmeldung des Nutzers übernimmt der Kerberos-Netzwerkdienst dessen Authentisierung zur Nutzung weiterer Netzwerkdienste.

Verschiedene, gleichfalls allgemein bekannte, auf Kerberos basierende Verfahren ermöglichen die Anmeldung eines Nutzers mittels Smartcard. Die Anmeldung mittels Smartcard ersetzt die einfache, wissensbasierte Anmeldung eines Nutzers mittels Nutzername und Passwort durch ein Verfahren, das einen persönlichen Besitz (der Smartcard) erfordert. Das auf der Smartcard gespeicherte Zertifikat wird hierbei erst nach Eingabe der dazu gehörenden PIN - beispielsweise über ein in das Lesegerät für die Smartcard integriertes Tastaturfeld - freigegeben, so dass die bekannten Verfahren durch eine zusätzliche wissensbasierte Komponente eine erhöhte Sicherheit gegen Missbrauch gewährleisten.

### Aufgabe

Der Erfindung liegt die Aufgabe zugrunde, ein Verfahren zur Anmeldung mittels Zertifikat vorzuschlagen, das keinen separaten Server zur Authentisierung erfordert und das zudem das Roaming von Benutzern ermöglicht.

### Lösung

Ausgehend von den bekannten Verfahren wird nach der Erfindung vorgeschlagen, dass die Anmeldedaten in dem Computersystem aus dem Zertifikat ermittelt werden. Das erfindungsgemäße Verfahren kann wie die bekannten Verfahren eine wissensbasierte, auf der Eingabe von Nutzername und Passwort basierende Logon-Prozedur durch eine auf Besitz (des Zertifikats) basierende Prozedur ersetzen, erfordert jedoch im Gegensatz zu diesen keinen separaten Server zur Authentisierung.

In einer bevorzugten Ausprägung des erfindungsgemäßen Verfahrens werden Nutzername und Passwort als Anmeldedaten aus dem Zertifikat berechnet. Die Verwendung eines berechneten - also kryptischen - Nutzernamens anstelle eines "Klarnamen" als personalisierte Logon-Information bietet noch einmal eine deutlich höhere Sicherheit gegen unbefugtes Anmelden an einem Computersystem als die Verwendung nur eines (kryptischen) Passworts als Berechtigungsnachweis aus dem Zertifikat.

Grundsätzlich sind alternativ auch erfindungsgemäße Verfahren denkbar, die ausschließlich das Passwort zur Verwendung mit einem Klarnamen oder auch ausschließlich den Nutzernamen (beispielsweise zur Verwendung an einem System, dass keine Passworteingabe ermöglicht) oder ein beliebiges anderes Geheimnis aus dem Zertifikat berechnen.

Besonders bevorzugt wird im Rahmen eines erfindungsgemäßen Verfahrens das Zertifikat mittels eines an dem Computersystem angeschlossenen Lesegerätes von einer Smartcard gelesen. Die Verwendung von Smartcards und Lesegeräten ermöglicht durch die Verwendung von Massenartikeln eine besonders kostengünstige Implementation eines erfindungsgemäßen Verfahrens. Prinzipiell kann das Zertifikat von jedem beliebigen Medium gelesen werden, das dem System zum Zeitpunkt der Anmeldung im Zugriff liegt.

Ein solches erfindungsgemäßes Verfahren ist besonders sicher, wenn der Nutzer einen dem Zertifikat zugeordneten Identifikationscode ("personal identification number", PIN) an dem Lesegerät eingibt und so das Zertifikat freigibt. So wird das erfindungsgemäße Verfahren durch eine zusätzliche wissensbasierte Komponente gesichert.

### Ausführungsbeispiel

Die Erfindung wird nachfolgend anhand eines Ausführungsbeispiels erläutert. Auf einem NT-Computersystem (Einzelplatzrechner oder Netzwerkserver) wird zur Einrichtung eines neuen Nutzers dessen Familienname als Nutzername verwendet. Ist bereits ein anderer Nutzer mit dem Familiennamen eingerichtet, so wird der neue Nutzername durch eine laufende Nummer ergänzt. Der Nutzername wird in einem Zertifikat als Klarname (im Feld "/CN", "common name") abgelegt und das Zertifikat auf einer Smartcard gespeichert. Die Smartcard wird dem Nutzer gemeinsam mit der zur Freigabe des Zertifikats erforderlichen PIN übergeben.

Mittels eines mathematischen Algorithmus wird sodann in dem Einrichtungsmodul aus dem Zertifikat ein kryptisches Passwort generiert: Im Allgemeinen werden aus dem Zertifikat einzelne Daten extrahiert, die optional gehasht werden. Mittels einer Kennwortfunktion wird aus den (gehashten) Daten sowie weiteren Parametern ein (vorläufiges) Kennwort berechnet. Die benutzten Parameter unterteilen sich dabei in öffentliche und geheime Parameter. Beispiele für öffentliche Parameter sind Start- oder Initialisierungsvektoren. Zu den geheimen Parametern gehören etwa benutzte kryptografische Schlüssel.

Die Kennwortfunktion muss so gewählt werden, dass es praktisch unmöglich ist, ohne Kenntnis der benutzten geheimen Parameter Funktionswerte der Kennwortfunktion zu berechnen. Beispiele für solche Kennwortfunktionen sind symmetrische Verschlüsselungsalgorithmen sowie Algorithmen zur Erstellung von digitalen Signaturen oder Message Authentication Codes (MACs). Falls erforderlich wird das (vorläufige) Kennwort umcodiert oder gekürzt um Beschränkungen des Zielsystems für Passwörter bzw. Credentials zu entsprechen.

Beispielsweise wird zur Berechnung des Passworts zunächst ein vordefinierter Startvektor gewählt und der Nutzername gehasht. Der resultierende Hash-Code wird mit dem Zertifikat signiert und alphanumerisch umcodiert und soweit erforderlich gekürzt, so dass es den Beschränkungen des Zielsystems für Passworte entspricht.

Zur Anmeldung an dem Computersystem (oder an NT-Clients, die an den Netzwerkserver angeschlossen sind) legt der Nutzer die Smartcard in ein lokal angeschlossenes Lesegerät ein und gibt die nur ihm selbst bekannte PIN ein. Ein anstelle des Original GINA-Moduls auf dem Computersystem installiertes Anmeldungsmodul liest das Zertifikat und bestimmt nach demselben Algorithmus Nutzernamen und Passwort des Nutzers für die Anmeldung und meldet diesen am Netzwerk an.

Das Passwort des Nutzers kommt weder dem Nutzer selbst, noch Dritten zur Kenntnis, da es nie gespeichert, sondern immer nur bei Bedarf berechnet und automatisch weiter verarbeitet wird. Da das Passwort auch nicht von einem Nutzer memoriert werden muss, steht das vollständige Spektrum bis hin zur maximal erlaubten Länge für dieses Passwort, sowie der vollständige Zeichenraum einschließlich der nicht über die Tastatur eingebbaren oder nicht am Bildschirm darstellbaren Zeichen zur Verfügung. Aus administrativer Sicht gestattet das erfindungsgemäße Verfahren die Verwendung der strengsten Regeln - einschließlich regelmäßiger Änderung des Passworts durch Änderung des in den Einrichtungs- und Anmeldungsmodulen verwendeten Algorithmus, beispielsweise mittels öffentlicher Parameter für diesen Algorithmus ohne Einschränkung der Nutzbarkeit des Computersystems.

Das erfindungsgemäße Verfahren kann in derselben Weise nicht nur für die Anmeldung an NT-Computersystemen Verwendung finden, sondern ist prinzipiell auch für andere Betriebssysteme oder auch für die Authentisierung an Einzelanwendungen in Computersystemen - geeignet. Für die Kennwortfunktion können unter anderem DES, 3DES, AES, RC4, RSA Signaturen oder HMAC und als Hashfunktion unter anderem MD5, RIPEMD-160 und SHA-1 verwendet werden.

Das Zertifikat des Nutzers kann alternativ zur Verwendung einer Smartcard auf beliebigen portablen Datenträgern, beispielsweise auf einem USB-Stick oder auf RAM-Karten oder auch auf einem PDA gespeichert sein und über Kabel (beispielsweise USB, seriell oder parallel) oder über eine andere Schnittstelle (beispielsweise Infrarot, Bluetooth, WLAN, GSM oder per SMS) an das Computersystem übertragen werden.

Dabei ist denkbar, dass der portable Datenträger nur als Speicher für das Zertifikat und die geheimen Parameter der Kennwortfunktion dient und diese an das Computersystem für weitere Berechnungen überträgt. Es ist aber auch denkbar, dass der portable Datenträger neben einer Speichereinheit auch über eine Recheneinheit verfügt, so dass das Kennwort vollständig auf der Karte berechnet werden kann und erst nach Abschluss der Berechnungen an das Computersystem übertragen wird.

Ferner sind Mischformen der beschriebenen Ansätze möglich. So ist es etwa denkbar, dass die Berechnung des Kennworts teilweise vom portablen Datenträger und teilweise vom Computersystem übernommen werden oder dass das Zertifikat auf dem Computersystem gespeichert ist und dass ediglich Parameter für die Kennwortfunktion auf dem portablen Datenträger gespeichert sind.

## Patentansprüche

1. Verfahren zur Anmeldung eines Nutzers an einem Computersystem, wobei sich der Nutzer durch ein Zertifikat an dem Computersystem identifiziert und er in dem Computersystem durch Anmeldedaten authentisiert wird, **dadurch gekennzeichnet, dass** die Anmeldedaten in dem Computersystem aus dem Zertifikat ermittelt werden.

2. Verfahren nach dem vorgenannten Anspruch, **dadurch gekennzeichnet, dass** die Anmeldedaten aus einem Nutzernamen und einem Passwort bestehen.

3. Verfahren nach einem der vorgenannten Ansprüche, **dadurch gekennzeichnet, dass** das Zertifikat mittels eines an dem Computersystem angeschlossenen Lesegerätes von einer Smartcard gelesen wird.

4. Verfahren nach dem vorgenannten Anspruch, **dadurch gekennzeichnet, dass** der Nutzer einen dem Zertifikat zugeordneten Identifikationscode an dem Lesegerät eingibt.
